(19) Europäisches Patentamt
European Patent Office
Office européen des brevets

(11) **EP 1 180 758 B1**

(12) **FASCICULE DE BREVET EUROPEEN**

(45) Date de publication et mention
de la délivrance du brevet:
**24.01.2007 Bulletin 2007/04**

(51) Int Cl.:
*G01S 3/808* (2006.01)    *G01S 11/14* (2006.01)
*G08G 1/04* (2006.01)

(21) Numéro de dépôt: **01490025.2**

(22) Date de dépôt: **17.07.2001**

(54) **Procédé et dispositif de détection par voie acoustique d'une source sonore mobile**

Verfahren und Vorrichtung zur akustischen Detektion einer mobilen Schallquelle

Method and device for acoustical detection of a mobile sound source

(84) Etats contractants désignés:
**AT BE CH CY DE DK ES FI FR GB GR IE IT LI LU MC NL PT SE TR**

(30) Priorité: **27.07.2000 FR 0009838**

(43) Date de publication de la demande:
**20.02.2002 Bulletin 2002/08**

(73) Titulaire: **SOLUTRONIC**
**59000 Lille (FR)**

(72) Inventeurs:
• **Cauwel, Eric**
**59118 - Wambrechies (FR)**
• **Masquelier, Pierre**
**59120 - Loos (FR)**

(74) Mandataire: **Matkowska, Franck et al**
**Cabinet Beau de Loménie**
**27bis, rue du Vieux Faubourg**
**59800 Lille (FR)**

(56) Documents cités:
**GB-A- 2 186 687**    **US-A- 4 208 735**

• **ZAMOJSKI W ET AL: "Mobile object localisation based on acoustic information" ISIE '97. PROCEEDINGS OF THE IEEE INTERNATIONAL SYMPOSIUM ON INDUSTRIAL ELECTRONICS (CAT. NO.97TH8280), ISIE '97 PROCEEDING OF THE IEEE INTERNATIONAL SYMPOSIUM ON INDUSTRIAL ELECTRONICS, GUIMARAES, PORTUGAL, 7-11 JULY 1997, pages 813-818 vol. 3, XP002165228 1997, New York, NY, USA, IEEE, USA ISBN: 0-7803-3936-3**
• **PATENT ABSTRACTS OF JAPAN vol. 1998, no. 11, 30 septembre 1998 (1998-09-30) & JP 10 172090 A (SEIWA ELECTRIC MFG CO LTD), 26 juin 1998 (1998-06-26)**

**Description**

La présente invention concerne le domaine de la détection par voie acoustique d'un mobile qui génère en continu une onde sonore lors de son déplacement. Elle propose un procédé et un dispositif de détection qui permettent de suivre dans le temps le mouvement de déplacement d'un tel mobile dans le champ d'un capteur acoustique, et plus particulièrement de déterminer des caractéristiques de ce mouvement tels que par exemple le sens et la vitesse de déplacement du mobile. L'invention trouve de manière préférentielle, mais non exclusive, son application à la détection du déplacement de véhicules terrestres sur une ou plusieurs voies de circulation.

Dans le domaine de la détection de mobiles , et en particulier de véhicules terrestre se déplaçant sur une voie de circulation, on a déjà proposé diverses solutions de détection.

Un premier type de solution repose sur la mise en oeuvre d'un détecteur actif, de type radar, qui émet en direction du véhicule cible un rayonnement incident (rayonnement infra rouge ou ondes HF), et qui traite le rayonnement réfléchi par le véhicule pour déterminer par exemple la vitesse du véhicule. Ce premier type de solution permet d'obtenir une mesure de vitesse relativement précise mais présente plusieurs inconvénients. En particulier, ces dispositifs de détection sont onéreux, fortement consommateurs d'énergie. Egalement, ce premier type de capteur demande souvent une visée en direction du véhicule pour obtenir une lecture de sa vitesse. Ceci suppose bien entendu que l'on ait déterminé la présence du véhicule. Ces appareils ne sont donc pas bien adaptés pour une surveillance en permanence du trafic routier, et de part leur coût, mal adaptés aussi à une surveillance sur une route où il faut tous les 500 m, par exemple, qualifier le trafic.

Un deuxième type de solution consiste à prévoir dans la chaussée des capteurs intrusifs, tels que par exemple des boucles à induction, qui permettent de détecter le passage des véhicules. L'inconvénient majeur de ce type de solution est son coût élevé lié en particulier aux coûts de mise en place des capteurs intrusifs dans la chaussée. En outre, l'installation des capteurs nécessite une interruption préjudiciable de la circulation pendant toute la durée des travaux.

On a également déjà proposé des procédés d'évaluation par voie acoustique d'un flux de véhicules. Ce type de procédé décrit par exemple dans la demande de brevet internationale WO-A-9218962 ou encore dans la demande de brevet français FR-A-2 708 123, repose d'une part sur la mise en oeuvre d'un capteur acoustique tel qu'un microphone, qui est positionné à proximité du passage des véhicules, et qui transforme le bruit généré par les véhicules en un signal électrique, et d'autre part sur une détection de l'amplitude du signal électrique délivré par ce capteur acoustique. Cette solution de détection par voie acoustique est intéressante en ce que le capteur mis en oeuvre est passif et non intrusif. En revanche, elle ne permet pas de détecter le mouvement de chaque véhicule dans un flux, mais permet seulement d'obtenir des informations globales sur le flux des véhicules.

On connaît d'autre part, d'après la publication de Zamojski W. et al. « Mobile object localisation based on acoustic information », ISIE '97, d'après également JP 10 172090, GB 2 186 687, et US 4 208 735, des procédés de localisation d'un objet mobile basé sur une information acoustique, qui permet de détecter un objet se déplaçant dans une certaine direction qui génère en continu une onde sonore. Dans ce procédé, deux transducteurs acoustiques positionnés à proximité du passage de l'objet mobile, fixes l'un par rapport à l'autre et décalés d'une certaine distance dans la direction de déplacement, permettent de transformer l'onde sonore émise par le mobile en deux signaux électriques décalés dans le temps en fonction de la position du mobile par rapport à ces transducteurs.

Dans Zamojski et al., une fonction d'intercorrélation des deux signaux est calculée, à des fins de comparaison des deux signaux. Le calcul est converti en une valeur d'angle indiquant la direction affective du mobile.

Dans JP 10 172090, seul le passage de l'objet mobile est détecte (information de type binaire : présence ou absence de l'objet)

Dans GB 2 186 687, la formation d'une voie acoustique est classiquement décrite, avec trois micros, trois décalages temporels associes pour une remise en phase, et recherche a posteriori du maximum de la fonction d'interférence ou d'interambiguïté.

Dans US 4 208 735, le système est auto-adaptatif et permet de détecter d'une part si l'objet est immobile ou en mouvement, et, dans le cas où il est en mouvement, si ce mouvement est unidimensionnel (horizontal), ou bidimensionnel (horizontal et vertical). Ce procédé trouve son application dans le cas d'objet se déplaçant très vite et très loin, de façon à laisser suffisamment de temps pour réaliser un asservissement du décalage temporel sur le maximum de la fonction d'intercorrélation.

Les systèmes ou procédés décrits dans ci-dessus, soit ne permettent pas du tout de déterminer la vitesse de déplacement de l'objet, soit ne permettent pas de déterminer cette vitesse avec sufiisamment de précision. En effet, en ne travaillant qu'en un point donné ou en plusieurs points avec des calculs purement géométriques, on ne peut s'affranchir de façon satisfaisante des bruits. En particulier, le rapport signal sur bruit n'est pas satisfaisant.

La présente invention propose donc une solution nouvelle de détection d'un mobile sonore, qui met avantageusement en oeuvre un capteur de type passif et non intrusif et qui permet, lorsqu'elle est mise en oeuvre sur un flux de plusieurs mobiles rapprochés, de suivre en temps réel le mouvement de chaque mobile sonore, indépendamment de l'intensité des sources sonores (bruit généré par les véhicules), avec une très bonne immunité aux bruits parasites susceptibles d'être générés par des sources sonores fixes (bruissement de feuilles d'arbre, bruits industriels ou environnementaux, ...), avec une bonne discrimination entre ou séparation de deux mobiles qui se suivent de façon rapprochée ou qui se croisent en sens inverse.

L'invention a ainsi pour premier objet un procédé de détection d'un mobile se déplaçant dans une direction donnée et générant en continu une onde sonore au cours de son déplacement, dans lequel on positionne, à proximité du passage du mobile, un capteur acoustique comprenant deux transducteurs acoustiques qui sont fixes l'un par rapport à l'autre, et décalés d'une distance selon la direction de déplacement du mobile, et qui permettent de transformer l'onde sonore émise par le mobile en deux signaux électriques décalés dans le temps d'un retard qui varie dans le temps en fonction de la position du mobile par rapport au capteur acoustique. De façon caractéristique, on calcule de manière itérative dans le temps une fonction d'intercorrélation discrétisée de ces deux signaux électriques, sur un intervalle de temps prédéterminé, on calcul pour chaque vitesse surveillée du mobile un profil de vitesse en forme de S ou de S inverse, à partir des maxima de la fonction d'intercorrelation discrétisée, on calcule pour chaque vitesse surveillée la somme de ces maxima de la fonction d'intercorrelation discrétisée, et on compare ces valeurs avec un seuil prédéterminé.

L'invention a également pour autre objet un dispositif de détection pour la mise en oeuvre du procédé ci-dessus.

Les caractéristiques et avantages de l'invention apparaîtront plus clairement et de manière plus complète, à la lecture de la description ci-après d'une variante préférée de réalisation, laquelle description est donnée à titre d'exemple non limitatif et en référence aux dessin annexés sur lesquels :

- la figure 1 représente de manière schématique une route à quatre voies de circulation, et un dispositif de détection conforme à l'invention sous la forme d'un synoptique fonctionnel des éléments essentiels de ce dispositif de détection,
- la figure 2 représente dans le temps les deux signaux électriques s1 (t) et s2(t) détectés par le capteur acoustique du dispositif de l'invention,
- les figures 3 et 4 représentent la courbe 3D de la fonction d'intercorrélation des deux signaux s1(t) et s2(t) dans le temps, lors du passage d'un véhicule devant le capteur acoustique du dispositif de détection,
- et les figures 5 et 6 sont deux courbes représentatives de deux exemples particuliers de profils de vitesse.

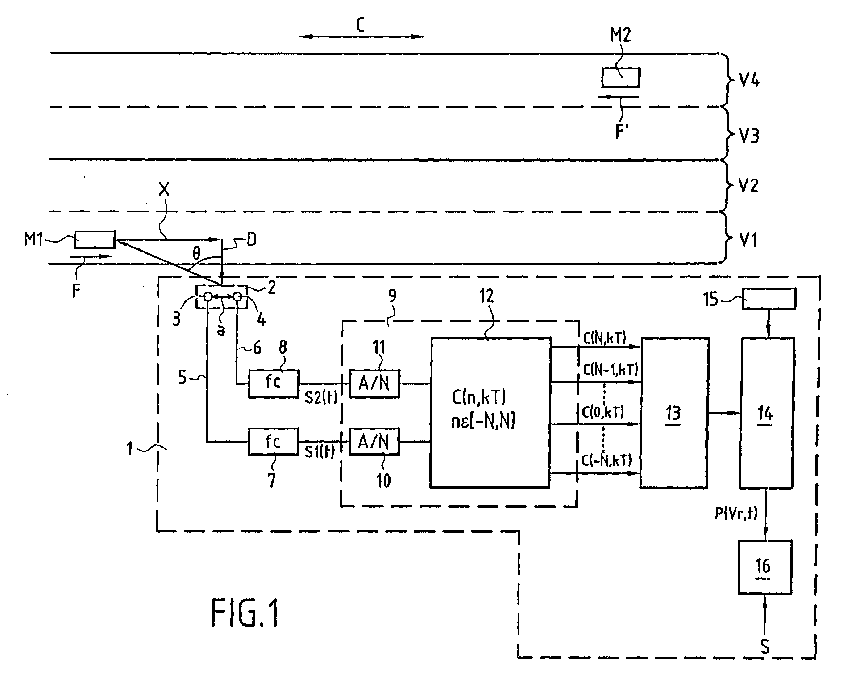

On a représenté de manière schématique sur la figure 1, quatre voies de circulation V1, V2, V3 et V4 parallèles. Sur les voies V1 et V2 peuvent circuler des véhicules tel que le véhicule M1, dans la direction de circulation C et dans un premier sens de circulation indiqué par la flèche F. Sur les voies V3 et V4 peuvent circuler des véhicules tel que le véhicule M2, également dans la direction de circulation C mais dans un sens opposé indiqué par la flèche F'. Sur l'un des deux bas côtés de ces voies de circulation, et en l'espèce à proximité immédiate de la voie de circulation V1, est monté un dispositif 1 de détection de véhicules conforme à l'invention et mettant en oeuvre un capteur 2 fixe.

En roulant sur une voie de circulation, chaque véhicule M1, M2 émet une onde sonore continue produite notamment par le bruit de fonctionnement du moteur du véhicule et par les frottements du véhicule sur le sol et dans l'air. Lorsqu'un véhicule arrive dans le champ de détection du capteur 2, l'onde sonore émise par le véhicule se propage dans l'air jusqu'au capteur 2. Le dispositif de détection 1, dont une variante préférée de réalisation va à présent être décrite, permet de transformer les ondes sonores captés en signaux électriques et de traiter ces signaux électriques, en sorte de détecter chaque véhicule passant devant le capteur 2, et d'en déduire un certain nombre de facteurs permettant une évaluation du trafic de véhicules sur les voies V1 à V4, dont notamment la vitesse et le sens de circulation de chaque véhicule détecté.

Le capteur 2 de l'invention comprend deux transducteurs acoustiques 3 et 4, présentant des caractéristiques de fonctionnement identiques, ou du moins le plus proches possibles. On désigne dans le présent texte par transducteur acoustique, tout élément qui permet de transformer l'information sonore captée en un signal électrique. Il peut s'agir par exemple d'un microphone ou d'un élément piézo-électrique.

Ces deux transducteur 3 et 4 sont espacés l'un par rapport à l'autre d'une distance $\underline{a}$, selon la direction C de circulation des véhicules. Egalement, sur le schéma de la figure 1, la variable X repère la position relative instantanée selon la direction circulation C d'un véhicule par rapport au capteur 2 ; la variable D repère la distance instantanée séparant un véhicule du capteur 2 dans la direction transversale à la direction de circulation C, et la variable θ repère l'angle instantané que fait un véhicule avec le capteur 2 par rapport à la direction transversale à la direction de circulation.

Les transducteurs 3 ou 4 délivrent en sortie respectivement deux signaux électriques 5 et 6, qui sont de type analogique. Le dispositif de détection 1 comprend un premier étage de filtrage composé de deux filtres passe haut 7 et 8, qui sont identiques, qui présentent une fréquence de coupure fc égale à c/a, avec c représentant la célérité du son dans le milieu de prorogation (c'est à dire en l'espèce l'air), et a étant la distance précitée entre les deux transducteurs 3 et 4. Les deux filtres 7 et 8 permettent respectivement de filtrer les signaux 5 et 6 en deux signaux analogiques s1(t) et s2(t). Ces deux filtres 7 et 8 permettent de rejeter les fréquences inférieures à la fréquence de coupure fc, le but visé étant de débarrasser les signaux s1(t) et s2(t) des bruits parasites basses fréquences, tel que par exemple le bruit du vent. Dans l'application particulière de la détection de véhicules terrestres, la fréquence de coupure fc sera de préférence choisie supérieure à 300 Hz et inférieure à 1 500 Hz. Le spectre de fréquence du bruit des véhicules s'étend de 50 Hz à plus de 30 KHz. Cette restriction de l'étendue de fréquence donnée par le capteur lui-même n'est donc pas gênante pour l'analyse du bruit généré par le véhicule.

Dans un exemple précis de réalisation, donné à titre purement indicatif, le milieu de propagation des ondes sonores étant l'air, la distance a valait environ 25 cm. L'invention n'est toutefois pas limitée à une application dans laquelle les ondes sonores émises par les mobiles que l'on veut détecter se propagent dans l'air, mais peut être étendue a tout autre type de milieu de propagation et notamment le sol. En particulier, on pourrait envisager dans une autre variante de réaliser au moyen du capteur 2 une détection des ondes sonores émises par les véhicules et se propageant dans le sol jusqu'au capteur 2 ; dans ce cas, la distance a serait plus importante et par exemple serait sensiblement égale à 1m.

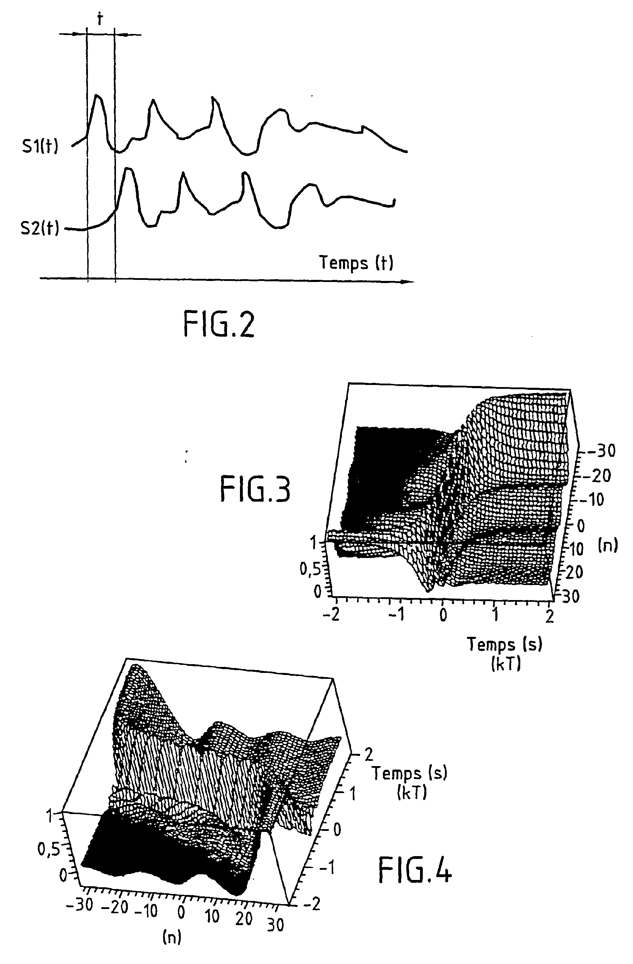

On a représenté sur la figure 2, un exemple de signaux s1(t) et s2(t), produits par les transducteurs 3 et 4, lors de l'arrivée du véhicule M1à proximité du capteur 2, et alors que ce véhicule M1 est encore situé en amont du transducteur 3 par rapport à son sens de circulation (par exemple position de M1 sur la figure 1). Les deux signaux s1(t) et s2(t) sont identiques mais retardés dans le temps l'un par rapport à l'autre d'une quantité $\tau$ variable dan le temps, du fait du décalage en position (distance a) entre les deux transducteurs 3 et 4. Plus précisément, lorsque le véhicule M1 est dans la position amont de la figure 1, il est plus proche du transducteur 3 que du transducteur 4, ce qui implique que le signal s2(t) est en retard d'un intervalle de temps $\tau$ par rapport à s1(t). Cet intervalle de $\tau$ va en diminuant au fur et à mesure où le véhicule M1 se rapproche du capteur 2, s'annule lorsque le véhicule M1 est sensiblement au droit (c'est-à-dire à égale distance des deux transducteurs 3 et 4), et augmente de nouveau lorsque le véhicule M1 passe au delà de cette position, le signal s1(t) étant cette fois retardé de $\tau$ par rapport à s2(t).

on comprend ainsi que la quantité $\tau$ est représentative de la position de la source sonore (véhicule M1) par rapport au capteur 2. La valeur de cette quantité $\tau$, appelée ci-après retard pur, est liée à la position relative du mobile détecté M1 par rapport au capteur 2 par la formule suivante :

$$(1) \qquad X = \frac{c\tau D}{2}\sqrt{-\frac{1}{D^2} + \frac{1}{(a^2 - \tau^2 c^2)}}$$

La variable X est en outre liée à la variable D, par la formule suivante :

$$(2) \quad \tan(\theta) = \frac{X}{D}$$

Si le véhicule détecté est en mouvement à la vitesse vr, la variable X est liée au temps par la formule suivante :

$$(3) \quad X = Vr.t$$

Le dispositif de détection 1 comprend des moyens de traitement des signaux s1(t) et s2(t) qui vont à présent être détaillés.

1$^{er}$ traitement / intercorrélation des signaux s1(t) et s2(t)

Les signaux s1(t) et s2(t) correspondant au bruit des véhicules sont corrélés sur un intervalle de temps T, qui en pratique est de l'ordre de 10ms. Au delà, les signaux sont non stationnaires. Les moyens de traitement 9 comprennent un filtre corrélateur 9, qui reçoit en entrée les deux signaux s1(t) et s(2(t) et qui permet de calculer de manière itérative dans le temps la fonction d'intercorrélation entre les deux signaux s1 (t) et s2(t), sur un intervalle de temps prédéterminé T (période de stationnarité). De manière usuelle, en théorie du signal, le calcul de la fonction d'intercorrélation permet d'obtenir une grandeur qui est caractéristique de l'identité entre les deux signaux. La formule mathématique générale de la fonction d'intercorrélation c($\tau$) sur l'intervalle de temps T est :

$$(4) \quad c(\tau) = K \int_0^T s1(t).s2(t-\tau)dt$$

K est une constante de proportionnalité.

De préférence, mais non nécessairement selon l'invention, la constante K est utilisée pour normer la fonction d'intercorrélation $c(\tau)$ par rapport à l'énergie des deux signaux s1(t) et s2(t) sur l'intervalle de temps T d'intégration, afin de s'affranchir du niveau des signaux s1(t) et s2(t). On évite ainsi avantageusement toute opération d'étalonnage du dispositif de détection. La fonction d'intercorrélation normée est donnée par la formule :

$$(5) \quad c(\tau) = \frac{\int_0^T s1(t).s2(t-\tau)dt}{\sqrt{\int_0^T s1(t)^2 dt.\int_0^T s2(t)^2 dt}}$$

Plus particulièrement, dans l'exemple de réalisation de la figure 1, pour le calcul itératif et en temps réel de la fonction d'intercorrélation entre les deux signaux s1(t) et s2(t) sur l'intervalle de temps T, selon la formule (5) ci-dessus, on utilise pour filtre corrélateur 9 un filtre numérique qui permet de calculer une fonction d'intercorrélation discrétisée c (n,kT).

Ce filtre 9 comprend en entrée deux convertisseurs analogique/numérique 10 et 11, qui permettent d'échantillonner respectivement les signaux analogiques s1(t) et s2(t), de manière synchrone, et avec la même fréquence d'échantillonnage (Fe). Les signaux s1(t) et s2(t) étant échantillonnés à la fréquence (Fe), le retard pur $\tau$ est quantifié en nombre entier par la formule :

$$(6) \quad \tau = \frac{n}{Fe}$$

Les données échantillonnées en sortie de chaque convertisseur sont traitées par un corrélateur numérique 12, qui permet de manière synchrone avec les convertisseurs 10 et 11, de multiplier (m) échantillons successifs des deux signaux, (discrétisation de la formule (5) ci-dessus), m étant lié à l'intervalle d'intégration T par la formule :

$$(7) \quad T = \frac{m}{Fe}$$

La structure et le fonctionnement du corrélateur numérique 12 pour le calcul d'une fonction d'intercorrélation discrète correspondant à la formule (5) sont tout à fait usuels pour le spécialiste du traitement de signal, qui connaît cette formule (5) et ne seront donc pas détaillés. Il sera simplement rappelé que le filtre 12 met en des registres à décalage pour l'implémentation des retards purs $\tau$, associés à des multiplicateurs et sommateurs numériques pour le calcul de la fonction d'intercorrélation.

En référence à l'exemple particulier de la figure 1, après chaque opération de calcul de la fonction d'intercorrélation discrétisée c(n,kT) par le module corrélateur 12, pour une période de temps donnée (kT), k étant un entier identifiant la période de calcul concernée, on obtient en sortie du module corrélateur 12, et en parallèle, (N+1) valeurs discrètes de la fonction d'intercorrélation, à savoir les valeurs discrètes C(N,kT), C(N-2, kT), ... C(0,kT), ...C(-N,kT), n étant un entier positif ou négatif pouvant prendre par pas de deux les valeurs entières discrètes de l'intervalle [-N,N]. Les données en sortie du module corrélateur 12 sont délivrées à une cadence définie par le temps T défini précédemment. La fonction c(n,kT) est disponible après ce temps T de calcul et au rythme du temps d'intégration de la fonction d'intercorrélation, n valeurs étant disponibles à chaque instant kT.

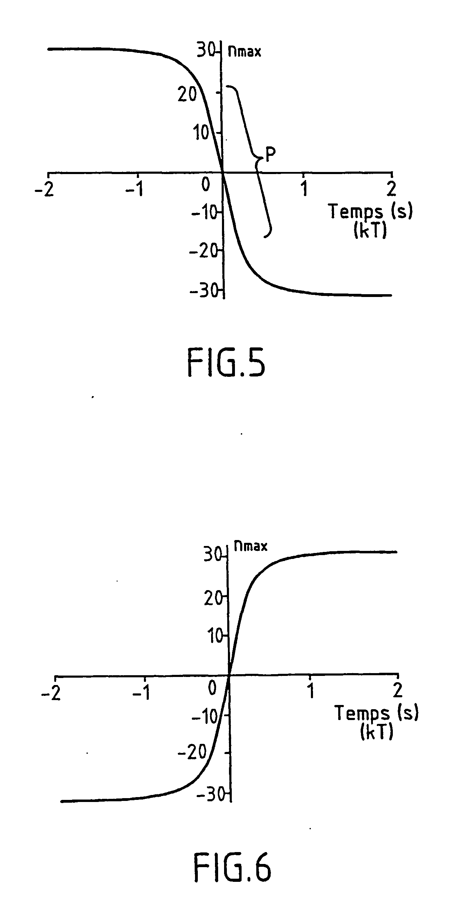

Dans un exemple précis de réalisation, la fréquence d'échantillonnage (Fe) valait 44KHz. Le calcul de la fonction d'intercorrélation c(n,kT) discrétisée était réalisé sur m échantillons, m valant plus particulièrement 512, la période de calcul T (égale à m/Fe) valant environ 11,6ms ; le module corrélateur 12 était conçu de telle sorte que N soit égal à 64. On a représenté sur la figure 3, un exemple de courbe 3D représentant l'évolution dans le temps de la fonction d'intercorrélation discrétisée C(n,kT), qui a été calculée avec l'exemple de réalisation précité, lors du passage d'un véhicule devant le capteur 2. La courbe D de la figure 4 représente la même courbe que la figure 3 mais sous une orientation différente. Sur ces deux courbes, ainsi que sur les courbes des figures 5 et 6 commentées ultérieurement, l'origine des temps est prise lors du passage du véhicule au droit du capteur 2.

Interprétation de la fonction d'intercorrélation des signaux s1(t) et s2(t)

La fonction d'intercorrélation des signaux s1(t) et s2(t) a pour interprétation physique la probabilité de présence d'un véhicule dans l'orientation $\tau$ à l'instant où le calcul de la fonction a été effectué, ou en d'autres termes pour la fonction d'intercorrélation discrétisée c(n,kT), dans l'orientation n pendant la période (kT) où le calcul a été effectué. Cette grandeur peut donc être interprétée comme une image de la probabilité de présence d'un véhicule dans la position définie par $\tau$ (ou n) et donc dans la position définie par (X) (en supposant la distance D connue par ailleurs) de par les propriétés des formules (1) et (2) précitées. En suivant l'évolution dans le temps de la fonction d'intercorrélation, on est donc capable de suivre dans le temps le mouvement d'un véhicule. Une méthode particulière de recherche de la présence d'un véhicule va à présent être détaillée.

2ème traitement / projection vectorielle de profils de vitesse

Le principe de détection de la présence, de la vitesse et du sens de circulation d'un véhicule est basé sur une projection vectorielle (figure 1/module 14) de profils de vitesse préenregistrés en mémoire (figure 1/module 15), sur chaque fonction d'intercorrélation c(n, kT) calculée itérativement.

Profil de vitesse :

Considérons un instant kT, le maximum de la courbe $c(n_{max})$ permet de définir la valeur du retard pur $\tau = n_{max}/fe$. Cette valeur particulière de $\tau$ correspond à une orientation bien précise de la source sonore de part les formules (1) et (2).
Si le véhicule est en mouvement, à l'instant suivant (k+1)T, le maximum de la courbe $c(n_{max})$ se sera déplacé à une autre valeur de $\tau$ prédictible.
Comme les véhicules sont sensés rouler en ligne droite, on peut prédire la nouvelle valeur de $\tau$ pour laquelle la fonction c(n,kT) sera maximale (par les formules (1) et (3)). Cette prédiction de cette nouvelle valeur est sujette à la connaissance de la valeur $\tau$ pour l'instant précédent (k-1) T et de la valeur de la vitesse Vr.
En d'autres termes, si l'on connaît la vitesse Vr, on peut prédire avec une excellente précision la position des maxima et comment ces maxima de la courbe c(n,kT) vont évoluer en fonction du temps kT.
Pour chaque vitesse, une série de valeurs $n_{max}$ peut être calculée en fonction des instants kT. C'est cette série de valeurs de $n_{max}$ que l'on appelle profil de vitesse.
Pour chaque vitesse de véhicule que l'on souhaite surveiller, on détermine le profil de vitesse $(n_{max}, kT)$ correspondant, et ce profil est stocké en mémoire 15. Le profil de vitesse est différent selon le sens de passage du véhicule (vitesse Vr négative ou positive)
A titre d'exemple, on a représenté sur la figure 5, la courbe représentant un profil particulier de vitesse, pour un véhicule passant devant le capteur 2 à une vitesse Vr donnée. Ce profil présente une forme en S, qui est caractéristique du passage d'un véhicule devant le capteur 2. On a représenté sur la figure 6, le profil de vitesse en S inverse qui est caractéristique du passage d'un véhicule devant le capteur 2 à la même vitesse Vr mais en sens inverse. La pente du profil de vitesse en S dans sa portion médiane sensiblement linéaire (portion p sur les figures 5 et 6) est caractéristique de la grandeur Vr/D (Vr étant la vitesse instantanée du véhicule et D la distance séparant ce véhicule du capteur 2 dans la direction transversale à la direction de circulation)

Projection vectorielle des profils de vitesse :

La projection vectorielle des profils de vitesse est réalisée par le module 14, et consiste à calculer pour chaque profil de vitesse préenregistré, une variable P par sommation des valeurs $c(n_{max},kT)$ de la fonction d'intercorrélation, les valeurs $n_{max}$ et kT étant données par le profil de vitesse préenregistré. De préférence, mais de manière non limitative selon l'invention, cette projection vectorielle n'est pas réalisée directement sur les valeurs c(n,kT) délivrées par le module d'intercorrélation 12, mais on fait subir préalablement à ces valeurs un écrêtage (module 13), en conservant, pour chaque série de valeurs C(n,kT) issues du module 12, uniquement celle dont la valeur d'intercorrélation est la plus grande, les autres valeurs étant écrêtées à zéro.

La variable P est une fonction du temps et de la vitesse (Vr) caractéristique du profil de vitesse projeté. Les modules 13 et 14 sont synchrones avec le filtre corrélateur 9. Ainsi, à chaque nouvelle série de valeur (n, kT), en sortie du module 12 est calculée en temps réel une variable P pour chaque vitesse surveillée (Vr).

La détection du passage et de la vitesse d'un véhicule devant le capteur est assurée par le module 16 (synchrone avec le filtre corrélateur 9), à partir des variables P(Vr, t) calculées en temps réel par le module 14, et par comparaison de ces variables avec un seuil prédéterminé S. Lorsque la variable P(Vr, t) la plus grande est supérieure à ce seuil S, le module 16 détecte automatiquement qu'un véhicule passe au droit du capteur à une vitesse sensiblement égale à la vitesse (Vr). Le sens de passage du véhicule est donné par le signe de la vitesse Vr.

Le tableau de mesure ci-après illustre un exemple de calcul de la variable P précitée pour différentes vitesses Vr surveillées, et pour un véhicule détecté au droit du capteur.

| Vitesse surveillée (Vr) | Valeur de P = $\Sigma c(n_{max}, kT)$ |
|---|---|
| km/h | pour k variant de -64 à 64 |
| 90 | 0.1 |
| 95 | 0.15 |
| 100 | 0.20 |
| 105 | 0.17 |
| 110 | 0.12 |
| 115 | 0.08 |
| 120 | 0.04 |

Dans cet exemple particulier, la valeur de la vitesse de passage du véhicule est environ 100km/h (avec un tolérance de +/- 5 km/h), parce que la valeur maximale de P (qui est supérieure au seuil prédéterminée S), correspond à cette valeur de vitesse. On peut affiner l'analyse et dire que la vitesse est supérieure à 100 km/h puisque la valeur à 95 km/h est inférieure à celle de 105 km/h.

La détermination du seuil S est faite une fois pour toute et ne dépend pas du lieu où s'effectue la mesure. Il ne dépend pas de l'amplitude du signal car la fonction d'intercorrélation est normée à l'énergie du signal (formule 5).

Avantages de l'invention

Le dispositif de détection qui a été décrit est avantageusement non intrusif (installation du dispositif sur le bas côté des voies de circulation et non dans la chaussée ou au dessus des voies de circulation) et est de ce fait très simple à installer et peut coûteux. En outre du fait de la normalisation de la fonction d'intercorrélation (formule (5)), le fonctionnement du dispositif est indépendant de l'intensité des sources sonores (bruit généré par les véhicules) ; de ce fait il ne nécessite aucun étalonnage lors de son installation .

Egalement, ce dispositif de détection est avantageusement de type passif, c'est-à-dire ne nécessite pas l'émission d'un rayonnement de détection avec calcul en retour du rayonnement réfléchi ; il est de ce fait très simple à mettre en oeuvre, et surtout très faiblement consommateur d'énergie.

Selon un autre avantage important de l'invention, le dispositif de détection permet de détecter tout type de mobile sonore (dans la bande de fréquences de fonctionnement des transducteurs 3 et 4, supérieure à la fréquence de coupure fc), sans qu'il soit nécessaire de connaître à priori le spectre en fréquence du signal sonore émis par le mobile, et avec une très bonne immunité aux bruits parasites susceptibles d'être générés par des sources sonores fixes (bruissement des feuilles d'arbres, bruits industriels ou environnementaux, ...)

Si plusieurs véhicules se suivent, les sources sonores étant décorrélées entre elles à l'issue d'une période de stationnarité d'environ 10ms, en pratique un seul véhicule sera analysé à la fois par l'intermédiaire de la fonction d'intercorrélation lors de son passage devant le capteur 2, et on obtient ainsi une bonne séparation des véhicules même s'ils sont proches (en 10ms,un véhicule se déplaçant à une vitesse de 300km/h ne parcourt que 0,83m).

Enfin, l'invention étant basée sur une intercorrélation des signaux s1(t) et s2(t), l'intégration qui s'ensuit d'un grand nombre (m) d'échantillons de signal sur la période de calcul T (environ 10ms), permet de gommer toute décorrélation qui se produirait pendant dans un laps de temps très court, et liée à un bruit parasite. En particulier, l'invention permet d'obtenir une immunité aux coup de vent qui se produisent sur un laps de temps court par rapport au temps de passage d'un véhicule dans le champ du capteur 2.

L'invention n'est pas limitée à l'application particulière de détection de véhicules sur une route qui a été décrite à titre d'exemple préféré de réalisation en référence aux figures annexées, mais s'étend à la détection de toute source sonore mobile. En outre, dans la variante particulière de réalisation qui a été décrite en référence aux figures, la fonction d'intercorrélation est calculée dans le domaine temporel (formule (4)). Dans une autre variante de réalisation de l'invention, cette fonction d'intercorrélation pourrait également, sans pour autant sortir du cadre de l'invention, être calculée de manière connue en soi par convolution dans le domaine fréquentiel.

## Revendications

1. Procédé de détection d'un mobile (M1) se déplaçant dans une direction donnée et générant en continu une onde sonore au cours de son déplacement, dans lequel on positionne, à proximité du passage du mobile, un capteur acoustique (2) comprenant deux transducteurs acoustiques (3, 4) qui sont fixes l'un par rapport à l'autre, et décalés d'une distance (a) selon la direction de déplacement du mobile, et qui permettent de transformer l'onde sonore émise par le mobile en deux signaux électriques (5,6) décalés dans le temps d'un retard ($\tau$) qui varie dans le temps en fonction de la position du mobile (M1) par rapport au capteur acoustique (2), **caractérisé en ce que** :

   - on calcule de manière itérative dans le temps une fonction d'intercorrélation discrétisée $c(n, kT)$ de ces deux signaux électriques, sur un intervalle de temps prédéterminé ($T=m/Fe$),
   - on calcul pour chaque vitesse ($Vr$) surveillée du mobile un profil de vitesse ($nmax, kT$) en forme de S ou de S inverse, à partir des maxima de la fonction d'intercorrelation discrétisée $c(n_{max}, kT)$,
   - on calcule pour chaque vitesse surveillée ($Vr$), une variable $P = \Sigma\, c(n_{max}, kT)$,
   - on compare ces variables P avec un seuil prédéterminé (S).

2. Procédé selon la revendication 1 **caractérisé en ce que** l'on compare la variable P maximale, parmi toutes les variables P calculées, avec le seuil prédéterminé (S).

3. Procédé selon la revendication 2 **caractérisé en ce que** la vitesse du mobile détecté est la vitesse associée à la variable P maximale lorsque celle-ci est supérieure au seuil prédéterminé (S).

4. Procédé selon l'une des revendications 1 à 3 **caractérisé en ce que** la fonction d'intercorrélation qui est calculée est normée par rapport à l'énergie des deux signaux électriques.

5. Procédé selon l'une des revendications 1 à 4 **caractérisé en ce que** les signaux électriques (5,6) délivrés par les deux transducteurs (3, 4), sont filtrés, préalablement au calcul itératif de la fonction d'intercorrélation, en sorte de rejeter les fréquences inférieures à une fréquence de coupure fc égale à c/a, le paramètre c représentant la célérité du son dans le milieu de propagation de l'onde sonore jusqu'au capteur acoustique.

6. Procédé selon la revendication 5 pour la détection d'un véhicule terrestre générant une onde sonore au contact du sol, **caractérisé en ce que** l'onde sonore émise par le véhicule se propage dans l'air jusqu'au capteur acoustique (2), et **en ce que** la distance (a) entre les deux transducteurs vaut environ 25cm.

7. Procédé selon la revendication 5 pour la détection d'un véhicule terrestre générant une onde sonore au contact du sol, **caractérisé en ce que** l'onde sonore émise par le véhicule se propage dans le sol jusqu'au capteur acoustique (2), et **en ce que** la distance (a) entre les deux transducteurs vaut environ 1m.

8. Dispositif pour la détection d'un mobile (M1) se déplaçant dans une direction donnée et générant en continu une onde sonore au cours de son déplacement, comportant un capteur acoustique (2) comprenant deux transducteurs acoustiques (3, 4) qui sont fixes l'un par rapport à l'autre, et décalés d'une distance (a) selon la direction de déplacement du mobile, et qui permettent de transformer l'onde sonore émise par le mobile en deux signaux électriques (5,6) décalés dans le temps d'un retard ($\tau$) qui varie dans le temps en fonction de la position du mobile (M1) par rapport au capteur acoustique (2), et **caractérisé en ce qu'**il comprend :

   - un filtre corrélateur numérique (9) apte à réaliser un calcul itératif dans le temps, d'une fonction d'intercorrélation discrétisée $c(n, kT)$ à partir des deux signaux délivrés par le capteur (2), et sur un intervalle de temps prédéterminé ($T = m/Fe$),
   - une mémoire (15) stockant, pour chaque vitesse surveillée ($Vr$) du mobile, un profil de vitesse ($n_{max}, kT$),
   - des moyens de traitement (14, 16) qui sont synchrones avec le filtre corrélateur (9) et qui ont pour fonction de calculer pour chaque vitesse surveillée ($Vr$), la variable $P = \Sigma\, c(n_{max}, kT)$, et comparer les variables P calculées avec un seuil prédéterminé (S).

**9.** Dispositif selon la revendication 8 **caractérisé en ce qu'**il est prévu pour être utilisé avec un milieu de propagation des ondes sonores qui est connu, et **en ce qu'**il comprend deux filtres passe haut (7,8), pour le filtrage avant traitement de chaque signal électrique (5,6) délivré par le capteur acoustique (2), chaque filtre ayant la même fréquence de coupure fc égale à c/a, avec c représentant la célérité du son dans le milieu de propagation des ondes sonores.

**10.** Dispositif selon la revendication 9 **caractérisé en ce que** la distance (a) entre les deux transducteurs (3,4) vaut sensiblement 25cm ou 1m selon que le dispositif est prévu pour être utilisé avec un milieu de propagation des ondes sonores qui est l'air ou le sol.

**Claims**

**1.** A method for detecting a mobile (M1) moving in a given direction and continuously generating a sound wave during its motion, wherein in proximity to the passage of the mobile, an acoustic sensor (2) is positioned, comprising two acoustic transducers (3, 4) which are fixed relatively to each other, and shifted by a distance (a) along the direction of motion of the mobile and with which the sound wave emitted by the mobile may be transformed into two electric signals (5, 6) time-shifted by a delay ($\tau$) which varies over time according to the position of the mobile (M1) relatively to the acoustic sensor (2), **characterized in that**:

- a discretized intercorrelation function c ($n_{max}$, kT) (1) of these two electric signals is iteratively calculated over time, over a predetermined time interval (T = m/Fe),
- for each monitored speed (Vr) (of the mobile) a speed profile (nmax, kT) is calculated as an S or inverted S, from maxima of the peaks of the discretized intercorrelation function c ($n_{max}$, kT),
- a variable P = $\Sigma$ c ($n_{max}$, kT) is calculated for each monitored speed (Vr),
- these variables P are compared with a predetermined threshold (S).

**2.** The method according to claim 1, **characterized in that** the maximum variable P among all the calculated variables P, is compared with a predetermined threshold (S).

**3.** The method according to claim 2, **characterized in that** the speed of the detected mobile is the speed associated with the maximum variable P when the latter is larger than the predetermined threshold (S).

**4.** The method according to any of claims 1 to 3, **characterized in that** the intercorrelation function which is calculated, is normalized relatively to the energy of both electric signals.

**5.** The method according to any of claims 1 to 4, **characterized in that** the electric signals (5, 6) delivered by both transducers (3, 4) are filtered, prior to the iterative calculation of the intercorrelation function, so as to reject frequencies which are less than a cut-off frequency fc equal to c/a, the parameter c representing the sound velocity in the sound wave propagation medium up to the acoustic sensor.

**6.** The method according to claim 5 for detecting an earth-borne vehicle generating a sound wave upon contacting the ground, **characterized in that** the sound wave emitted by the vehicle propagates in air up to the acoustic sensor (2) and **in that** the distance (a) between both transducers is about 25 cm.

**7.** The method according to claim 5 for detecting an earth-borne vehicle generating a sound wave upon contacting the ground, **characterized in that** the sound wave emitted by the vehicle propagates in the ground up to the acoustic sensor (2) and **in that** the distance (a) between both transducers is about 1 m.

**8.** A device for detecting a mobile (M1) moving in a given direction and continuously generating a sound wave during its motion, including an acoustic sensor (2) comprising two acoustic transducers (3, 4) which are fixed relatively to each other, and shifted by a distance (a) along the direction of motion of the mobile, and with which the sound wave emitted by the mobile may be transformed into two electric signals (5, 6) time-shifted with a delay ($\tau$) which varies over time according to the position of the mobile (M1) relatively to the acoustic sensor (2) and **characterized in that** it comprises:

- a digital correlation filter (9) capable of performing an iterative calculation over time, of a discretized intercorrelation function c(n, kT) from both signals delivered by the sensor (2), and over a predetermined time interval (T = m/Fe),

- a memory (15) storing a speed profile ($n_{max}$, kT) for each monitored speed (Vr) of the mobile,
- processing means (14, 16) which are synchronous with the correlation filter (9) and which has the function of calculating for each monitored speed (Vr), the variable $P = \Sigma c(n_{max}, kT)$, and of comparing the calculated variables P with a predetermined threshold (S).

9. The device according to claim 8, **characterized in that** it is provided for use with a known sound wave propagation medium, and **in that** it comprises two high-pass filters (7, 8), for filtering before processing each electric signal (5, 6) delivered by the acoustic sensor (2), each filter having the same cut-off frequency fc equal to c/a, with c representing the sound velocity in the sound wave propagation medium.

10. The device according to claim 9, **characterized in that** the distance (a) between both transducers (3, 4) is substantially 25 cm or 1 m according to whether the device is provided for use with a sound wave propagation medium which is either the air or the ground.

## Patentansprüche

1. Verfahren zur Detektion eines beweglichen Körpers (M1), der sich in eine vorgegebene Richtung bewegt und der kontinuierlich eine Schallwelle bei seiner Bewegung erzeugt, wobei ein akustischer Sensor (2) in die Nähe des Vorbeilaufens des beweglichen Körpers positioniert wird, der zwei Schallwandler (3, 4) umfaßt, die einander gegenüber befestigt sind und die um einen Abstand (a) gemäß der Bewegungsrichtung des beweglichen Körpers versetzt sind und die es erlauben, die von dem beweglichen Körper ausgesandte Schallwelle in zwei elektrische Signale (5, 6) umzuwandeln, die um eine Zeitverzögerung (T) verzögert sind, die zeitlich in Abhängigkeit der Position des beweglichen Körpers (M1) in Bezug auf den akustischen Sensor (2) variiert, **dadurch gekennzeichnet, daß:**

   - eine diskretisierte Interkorrelationsfunktion c(n, kT) dieser zwei elektrischen Signale gemäß einer zeitlich iterativen Weise über einen vorbestimmten Zeitraum (T= m/Fe) berechnet wird,
   - für jede überwachte Geschwindigkeit (Vr) des beweglichen Körpers ein S-förmiges oder umgekehrtes S-förmiges Geschwindigkeitsprofil (nmax, kT), basierend auf den Maxima der diskretisierten Interkorrelationsfunktion $c(n_{max}, kT)$, berechnet wird,
   - für jede überwachte Geschwindigkeit (Vr) eine Variable $P=\Sigma c(n_{max}, kT)$ berechnet wird,
   - diese Variablen P mit einer vorbestimmten Schwelle (S) verglichen werden.

2. Verfahren nach Anspruch 1, **dadurch gekennzeichnet, daß** die maximale Variable P von allen berechneten Variablen P, mit der vorbestimmten Schwelle (S) verglichen wird.

3. Verfahren nach Anspruch 2, **dadurch gekennzeichnet, daß** die Geschwindigkeit des detektierten beweglichen Körpers die mit der maximalen Variablen P verknüpfte Geschwindigkeit ist, wenn diese größer ist als die vorbestimmte Schwelle (S).

4. Verfahren nach einem der Ansprüche 1 bis 3, **dadurch gekennzeichnet, daß** die Interkorrelationsfunktion, die berechnet wird, in Bezug auf die Energie der zwei elektrischen Signale normiert wird.

5. Verfahren nach einem der Ansprüche 1 bis 4, **dadurch gekennzeichnet, daß** die elektrischen Signale (5, 6), die von den zwei Schallwandlern (3, 4) geliefert werden, vor der iterativen Berechnung der Interkorrelationsfunktion derart gefiltert werden, daß die Frequenzen, die kleiner sind als eine Schnittfrequenz fc, die gleich c/a ist, abgelehnt werden, wobei der Parameter c die Schallgeschwindigkeit in dem Übertragungsmedium der Schallwelle bis zum akustischen Sensor darstellt.

6. Verfahren nach Anspruch 5 für die Detektierung eines terrestrischen Kraftfahrzeuges, das beim Kontakt mit dem Boden eine Schallwelle erzeugt, **dadurch gekennzeichnet, daß** die von dem Kraftfahrzeug erzeugte Schallwelle sich in die Luft bis zum akustischen Sensor (2) fortpflanzt und, daß der Abstand (a) zwischen den zwei Schallköpfen ca. 25 cm beträgt.

7. Verfahren nach Anspruch 5 für die Detektierung eines terrestrischen Kraftfahrzeuges, das beim Kontakt mit dem Boden eine Schallwelle erzeugt, **dadurch gekennzeichnet, daß** die von dem Kraftfahrzeug erzeugte Schallwelle sich in den Boden bis zum akustischen Sensor (2) fortpflanzt und, daß der Abstand (a) zwischen den zwei Schallköpfen ca. 1 m beträgt.

8. Vorrichtung zur Detektion eines beweglichen Körpers (M1), der sich in eine vorgegebene Richtung bewegt und der kontinuierlich eine Schallwelle bei seiner Bewegung erzeugt, umfassend einen akustischen Sensor (2), der zwei Schallwandler (3, 4) umfaßt, die einander gegenüber befestigt sind und die um einen Abstand (a) gemäß der Bewegungsrichtung des beweglichen Körpers versetzt sind und die es erlauben, die von dem beweglichen Körper ausgesandte Schallwelle in zwei elektrische Signale (5, 6) umzuwandeln, die der um eine Zeitverzögerung (T) verzögert sind, die zeitlich in Abhängigkeit der Position des beweglichen Körpers (M1) in Bezug auf den akustischen Sensor (2) variiert und **dadurch gekennzeichnet, daß** sie umfaßt:

   - einen digitalen Korrelationsfilter (9), der in der Lage ist, eine zeitlich iterative Berechnung einer diskretisierten Interkorrelationsfunktion c(n, kT) aus den zwei Signalen, die von dem Sensor (2) geliefert werden und über einen vorbestimmten Zeitraum (T= m/Fe) auszuführen,
   - einen Speicher (15), der für jede überwachte Geschwindigkeit (Vr) des beweglichen Körpers ein Geschwindigkeitsprofil (nmax, kT) speichert,
   - Verarbeitungsmittel (14, 16), die mit dem Korrelationsfilter (9) synchron sind und deren Funktion ist, für jede überwachte Geschwindigkeit (Vr) des beweglichen Körpers die Variable P= Σc(nmax, kT) zu berechnen und die berechneten Variablen P mit einer vorbestimmten Schwelle (S) zu vergleichen.

9. Vorrichtung nach Anspruch 8, **dadurch gekennzeichnet, daß** sie dafür vorgesehen ist, mit einem bekannten Übertragungsmedium der Schallwellen benutzt zu werden und, daß sie zwei Hochpaßfilter (7, 8) zum Filtern von jedem elektrischen Signal (5, 6), das von dem akustischen Sensor (2) geliefert ist, vor der Verarbeitung, wobei jeder Filter die selbe Schnittfrequenz fc aufweist, die gleich c/a ist, wobei c die Schallgeschwindigkeit der Schallwellen in dem Übertragungsmedium darstellt.

10. Vorrichtung nach Anspruch 9, **dadurch gekennzeichnet, daß** der Abstand (a) zwischen den zwei Schallwandlern (3, 4) im wesentlichen 25 cm oder 1 m beträgt, je nachdem, ob die Vorrichtung dafür vorgesehen ist, um in einem Übertragungsmedium der Schallwellen verwendet zu werden, das die Luft oder der Boden ist.

FIG.1

FIG.2

FIG.3

FIG.4

FIG.5

FIG.6